# EUROPÄISCHE PATENTSCHRIFT

(11) **EP 0 850 899 B1**
(45) Veröffentlichungstag und Bekanntmachung des Hinweises auf die Patenterteilung: **16.05.2001**
(21) Anmeldenummer: 97810737.3
(22) Anmeldetag: 06.10.1997
(51) Int. Cl.: C04B 41/51, C23C 4/08

(54) **Verfahren zum Beschichten von Kohlenstoffsubstraten oder nichtmetallischen, kohlenstoffhaltigen Substraten sowie Substrat beschichtet nach dem Verfahren**
Method of coating carbon or carbon containing nonmetallic substrates and substrate coated thereby
Procédé de revêtement d'un substrat en carbone ou d'un substrat nonmétallique comprenant du carbone et substrat revêtu selon ce procédé

(30) Priorität: 24.12.1996 CH 318596
(43) Veröffentlichungstag der Anmeldung: 01.07.1998
(73) Patentinhaber: Sulzer Metco AG, 5610 Wohlen (CH)
(72) Erfinder: Salito, Armando, Dr., 5610 Wohlen (CH)
(74) Vertreter: Rottmann, Maximilian R.

(56) Entgegenhaltungen:
- EP-A- 0 024 764
- EP-A- 0 533 105
- DE-A- 1 930 095
- DE-A- 2 251 656
- US-A- 3 085 317
- PATENT ABSTRACTS OF JAPAN vol. 013, no. 388 (C-630), 28.August 1989 -& JP 01 136962 A (NISSAN MOTOR CO LTD), 30.Mai 1989, -& CHEMICAL ABSTRACTS, vol. 111, no. 26, 25.Dezember 1989 Columbus, Ohio, US; abstract no. 238501z, XP002058883

## Beschreibung

Die vorliegende Erfindung bezieht sich auf ein Verfahren zum Beschichten von Kohlenstoffsubstraten oder von nichtmetallischen, kohlenstoffhaltigen Substraten gemäss dem Oberbegriff des Anspruchs 1. Im weiteren wird im Anspruch 23 ein Kohlenstoffsubstrat oder ein nichtmetallisches, kohlenstoffhaltiges Substrat unter Schutz gestellt, welches nach dem Verfahren beschichtet ist.

Um auf Kohlenstoffsubstraten oder nichtmetallischen, kohlenstoffhaltigen Substraten ein Schicht, beispielsweise aus einem hochschmelzenden Metall, sicher haftend aufbringen zu können, muss im allgemeinen zuerst ein Haftvermittler in Form einer Grundschicht auf das Substrat aufgetragen werden. Als Basisstoff für eine solche Grundschicht, welche hohen Temperaturen ausgesetzt ist, hat sich beispielsweise Rhenium sehr bewährt. Das eine Problem beim Aufbringen einer derartigen Grundschicht auf die genannten Substrate besteht darin, dass die Haftung zwischen der aufzubringenden Schicht und dem Kohlenstoffsubstrat bzw. einem nichtmetallischen, kohlenstoffhaltigen Substrat an der Korngrenze zwischen Substrat und Grundschicht in der Regel ungenügend ist.

Ein weiteres Problem beim Beschichten besteht darin, dass die bevorzugten Schichtwerkstoffe teilweise hohe Schmelzpunkte aufweisen, Rhenium beispielsweise über 3400 Kelvin. Es versteht sich, dass ein schmelzflüssiges Aufbringen von Werkstoffen mit einem Schmelzpunkt jenseits von 1500 Kelvin mit Schwierigkeiten verbunden ist.

Um Grundschichten wie Rhenium zuverlässig auf Kohlenstoffsubstraten bzw. auf nichtmetallischen, kohlenstoffhaltigen Substraten aufzutragen haben sich bis heute zwei Verfahren etabliert, nämlich das Galvanisieren sowie die Gasphasenabscheidung.

Sowohl galvanische Verfahren wie auch die Gasphasenabscheidung haben jedoch den prinzipiellen Nachteil, dass sie zeitaufwendig sind und sich nur zum Aufbringen von relativ dünnen Schichten eignen. Zudem wird aus Gründen des Umweltschutzes wenn immer möglich auf die beiden vorgängig erwähnten Verfahren verzichtet. Ein weiteres Problem der beiden angeführten Verfahren besteht darin, dass es aufwendig ist, die Substrate nur partiell zu beschichten. Zudem ist weder das Galvanisieren noch die Gasphasenabscheidung dazu geeignet, Schichten kleiner Körnung aufzubringen. Schliesslich lässt auch die Reproduzierbarkeit der beiden Verfahren zu wünschen übrig, was sich in einem hohen Ausschuss an beschichteten Substraten bemerkbar macht.

Beispielsweise ist aus der DE 33 38 740 Al ein Verfahren zur selektiven Abscheidung einer Schicht eines hochschmelzenden Metalls auf einem Werkstück aus Graphit bekannt. Bei diesem Verfahren wird auf ausgewählten Oberflächenbereichen des Werkstücks die als Haftvermittler dienende, Zwischenschicht genannte Grundschicht durch ein elektrolytisches Verfahren abgeschieden. Um das Werkstück in denjenigen Bereichen abzudecken, in denen keine Zwischenschicht abgeschieden werden soll, sind Masken vorgesehen, die am Substrat befestigt werden. Die Deckschicht wird anschliessend mittels bekannten Verfahren wie bsp. durch chemische Abscheidung in der Gasphase aufgetragen. Anschliessend wird die aus hochschmelzendem Metall bestehende Deckschicht in denjenigen Bereichen entfernt, in denen keine Zwischenschicht abgeschieden worden ist. Es versteht sich, dass ein solches Verfahren aufwendig und teuer ist. Auch muss für jede Beschichtung eine neue Maske verwendet werden.

Auch aus der folsender Pruckschriften sind ähnliche Verfahren bekannt.

EP 0 024 764 beschreibt ein Verfahren zum Herstellen einer Rotations-Anode für eine Röntgenvorrichtung. Dazu wird ein aus Molybdän oder Graphit bestehendes Substrat mittels eines Plasmatrons erhitzt und danach im Plasmaspritzverfahren eine Wolframschicht mit einer Dicke zwischen 1.5 und 2mm aufgebracht.

Chemical Abstract 111:238501z, JP 01136962 offenbart ein Verfahren zum Beschichten von hitzebeständigen Materialien mit einem oder mehreren Filmen aus einem hochschmelzenden Metall. Aus diesem Dokument geht nicht hervor, dass nach einer ersten Schicht zumindest eine weitere Schicht aufgetragen wird, und dass ein kontinuierlicher Übergang zwischen dem Auftragen der ersten und der weiteren Schicht gewählt wird, indem die dem Plasmastrahl pro Zeiteinheit zugeführte Materialmenge der ersten Schicht kontinuierlich reduziert wird, währenddem gleichzeitig diejenige der zweiten Schicht kontinuierlich erhöht wird.

DE 225 1656 beschreibt eine Röntgenröhren-Drehanode mit einem Grundkörper aus Graphit. Die Drehanode ist teilweise mit einer aus Wolfram bestehenden Zwischenschicht versehen, auf die eine ebenfalls aus Wolfram bestehende, "Schwermetallschicht" genannte zweite Schicht aufgetragen wird. Die Zwischenschicht wird pyrolitisch aufgebracht, indem der Grundkörper einer Wolframhexafluorid enthaltenden Atmosphäre ausgesetzt wird. Danach wird die zweite Schicht mittels Plasmaspritzen aufgebracht.

Es ist somit die Aufgabe der Erfindung, ein Verfahren gemäss dem Oberbegriff des Anspruchs 1 vorzuschlagen, mittels welchem ein Kohlenstoffsubstrat oder ein nichtmetallisches, kohlenstoffhaltiges Substrat schnell, umweltfreundlich und preisgünstig mit einer sicher haftenden Schicht versehen werden kann.

Diese Aufgabe wird dadurch gelöst, dass die im Anspruch 1 definierten Verfahrensschritte durchgeführt werden.

Überraschenderweise hat sich gezeigt, dass durch Plasmaspritzen aufgetragene Grundschichten sehr gut auf den erwähnten Substraten haften. Dies ist darauf zurückzuführen, dass die mit hoher Geschwindigkeit auf dem Substrat auftreffenden, geschmolzenen Partikel in die Oberflächenstruktur des kohlenstoffhaltigen Substrats sowie in dessen Vertiefungen eindringen.

Ein weiterer Vorteil des vorgeschlagenen Verfahrens besteht darin, dass das Substrat wesentlich schneller als bisher beschichtet werden kann, da das Aufbringen der Grundschicht durch Plasmaspritzen sehr viel schneller vonstatten geht als dies mit galvanischen Verfahren oder mit einer Gasphasenabscheidung möglich wäre. Ein weiterer Vorteil gegenüber galvanischen Verfahren besteht darin, dass, zumindest was die Grundschicht betrifft, insgesamt reinere Schichten aufgetragen werden können. Dies rührt insbesondere daher, dass Kohlenstoffsubstrate, bzw. nichtmetallische, kohlenstoffhaltige Substrate porös sind und sich Wasser sowie Verunreinigungen aus dem Galvanobad in einer Oberflächenschicht des Substrats anlagern, wodurch die Qualität der Grundschicht beeinträchtigt wird. Zudem braucht die aufgetragene Grundschicht nicht, wie dies bei galvanischen Verfahren üblich ist, einer nachfolgenden Wärmebehandlung unterzogen zu werden. Schliesslich ist Plasmaspritzen sehr umweltfreundlich weil als Betriebsmedien nur inerte Gase wie Argon, Wasserstoff oder Helium sowie elektrische Energie benötigt werden und keine gefährlichen Abfallstoffe wie bei den eingangs erwähnten Verfahren entstehen. Auch ist die chemische Zusammensetzung der

aufzutragenden Schicht viel einfacher zu kontrollieren. Ein weiterer Vorteil des Plasmaspritzens besteht darin, dass gezielt nur einzelne Bereiche des Substrats beschichtet werden können, was in vielen Fällen gewünscht ist und eine Materialersparnis mit sich bringt. Schliesslich können durch Plasmaspritzen auch komplizierte und verwinkelte Oberflächen zuverlässig beschichtet werden.

Das vorgeschlagene Verfahren hat insbesondere auch dann Vorteile, wenn nebst der Grundschicht eine aus einem hochschmelzenden Metall bestehende Deckschicht auf das Substrat aufgetragen wird. In diesem Fall können beide Schichten unmittelbar nacheinander durch Plasmaspritzen aufgetragen werden, wodurch die Eigenspannungen der Schicht reduziert werden können, da das Substrat zwischen dem Auftragen der Grund- und der Deckschicht nicht abgekühlt werden muss. Ausserdem bringt dieses Verfahren eine weitere Zeit- und Kostenersparnis mit sich.

Gemäss der Erfindung ist vorgesehen, dass das Substrat vor dem Aufbringen der Grundschicht erhitzt wird. Durch dieses Erhitzen kann die Adhäsion zwischen Substrat und Grundschicht nochmals verbessert werden. Der Grund dafür könnte sein, dass das Erhitzen des Substrats auf eine gewisse Mindesttemperatur das Eindringen von Rheniumpartikeln in das Kohlenstoff-Gitter des Substrats begünstigt. Zudem hat sich gezeigt, dass durch das Erhitzen die im Substrat sowie in der Grund- bzw. Deckschicht auftretenden, thermomechanischen Spannungen reduziert werden können, und zwar insbesondere dann, wenn der beschichtete Körper im Einsatz hohen Temperaturen ausgesetzt ist und die einzelnen Materialien unterschiedliche Ausdehnungskoeffizienten aufweisen.

Die Ansprüche 2 bis 22 umschreiben bevorzugte Ausführungsformen bzw. Weiterbildungen des Verfahrtens, währenddem die Ansprüche 24 bis 26 bevorzugte Ausführungsformen bzw. Weiterbildungen des erfindungsgemässen Substrats beinhalten.

Anhand von Prinzipskizzen soll das erfindungsgemässe Verfahren nachfolgend näher erläutert werden. Dabei zeigt die
- Fig. 1: eine Anordnung zum Beschichten von Substraten;
- Fig. 2: einen Querschnitt durch ein erstes, beschichtetes Substrat;
- Fig. 3: einen Querschnitt durch ein zweites, beschichtetes Substrat;
- Fig. 4: einen Querschnitt durch ein drittes, beschichtetes Substrat;
- Fig. 5: einen Querschnitt durch ein viertes, beschichtetes Substrat, und
- Fig. 6: einen Querschnitt durch ein Substrat dessen Oberfläche strukturiert wurde.

Da sowohl Plasmaspritzgeräte selber wie auch das Beschichten von Substraten mittels Plasmaspritzen bekannt sind, wird nachfolgend nur auf die im Zusammenhang mit der Erfindung wesentlichen Vorrichtungsteile sowie Verfahrensschritte eingegangen.

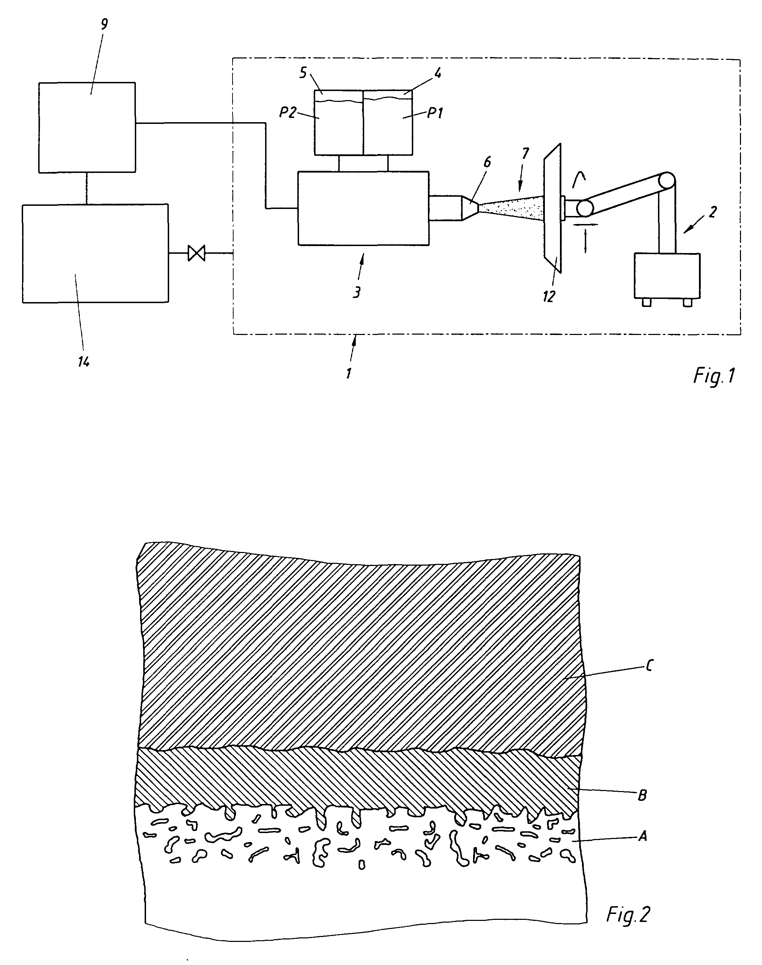

Fig. 1 zeigt eine Anordnung zum Beschichten von Substraten. Diese Anordnung besteht im wesentlichen aus einem andeutungsweise eingezeichneten Tank 1, in dem eine gegenüber der Umgebungsluft abgeschlossene Atmosphäre erzeugt werden kann. In diesem Tank 1 sind ein Roboter 2, ein Plasmaspritzgerät 3 sowie das zu beschichtende Substrat 12, welches beispielsweise aus Kohlenstoff besteht, aufgenommen. Die zum Betrieb des Plasmaspritzgeräts 3 notwendige Infrastruktur wie beispielsweise ein Kommandopult, eine Stromversorgung, Druckregelung etc. ist als ein ausserhalb des Tanks 1 liegender Block 9 eingezeichnet. Oberhalb des Plasmaspritzgeräts 3 sind zwei Vorratsbehälter 4, 5 eingezeichnet, in denen je ein Beschichtungsmaterial in Form von Pulver aufgenommen ist. Der eine Vorratsbehälter 4 ist mit einem Pulver P1 für die Grundschicht gefüllt währenddem der andere Vorratsbehälter 5 mit einem Pulver P2 für die Deckschicht gefüllt ist. Als Pulver P1 kann beispielsweise Rhenium verwendet werden, währenddem als Pulver P2 beispielsweise Wolfram eingesetzt werden kann. Im weiteren ist eine Vorrichtung 14 vorgesehen, mittels welcher der Tank 1 mit einem Inertgas wie beispielsweise Argon geflutet werden kann. Die Vorrichtung dient aber auch dazu, den Tank 1 im Bedarfsfall zu Evakuieren.

Durch den Roboter 2 kann das Substrat 12 während dem Beschichten in den gewünschten Richtungen und Ebenen bewegt werden, wobei anstelle eines Roboters 2 zum Bewegen des Substrates 12 natürlich auch ein beweglich angeordnetes Plasmaspritzgerät eingesetzt werden könnte.

Das Beschichten des Substrates 12 geht folgendermassen vonstatten, wobei betont werden muss, dass das nachfolgende Verfahrensbeispiel stark vereinfacht dargelegt ist und keinen einschränkenden Charakter aufweisen soll:

Als erstes wird im Tank 1 eine definierte Atmosphäre geschaffen, indem dieser bis in den Bereich von ca. 10⁻² mbar evakuiert und danach mit einem inerten Gas -beispielsweise Argon-soweit gefüllt, bis der Druck im Tank ca. 100 mbar erreicht hat. Danach wird das Substrat 12 mittels des Plasmaspritzgerätes 6 auf eine Temperatur zwischen 500° und 2500° Celsius erhitzt. Es versteht sich, dass dem Plasmaspritzgerät 3 zum Erwärmen des Substrats 12 kein Beschichtungspulver zugeführt wird. Nachdem das Substrat 12 die gewünschte Temperatur erreicht hat, wird dem Plasmaspritzgerät 3 Pulver P1 aus dem einen Vorratsbehälter 4 zugeführt. Dieses Pulver P1 wird in der aus einer Düse 6 des Plasmaspritzgerätes 3 austretenden Plasma-flamme 7 derart erhitzt, dass es in schmelzflüssiger Form auf das Substrat 12 aufgetragen wird. Um die gewünschte Schichtdicke zu erreichen, werden vorzugsweise mehrere Lagen - Grundschichten - des geschmolzenen Pulvers P1 nacheinander aufgetragen.

Die aufgetragene Grundschicht dient als Haftvermittler für die nachfolgende Deckschicht, für welche im vorliegenden Beispiel das Pulver P2 verwendet werden soll. Dazu wird dem Plasmaspritzgerät Pulver P2 aus dem anderen Vorratsbehälter 5 zugeführt. Dieses Pulver P2 wird ebenfalls im Plasmastrahl erhitzt und in schmelzflüssiger Form auf das Substrat bzw. auf die Grundschicht aufgetragen.

Als Materialien für die Grund- und/oder die Deckschicht kommen vorzugsweise Materialien in Frage, deren Schmelztemperatur höher als 1050 Kelvin ist und die zumindest teilweise aus einem feuerfesten Metall oder einer feuerfesten Metalllegierung bestehen. Bezüglich der Bezeichnung feuerfest wird auf die DIN-Norm 51060 verwiesen, welche sinngemäss lautet, dass unter Feuerfestmaterialien Werkstoffe zu verstehen sind, die einen Segerkegel-Fallpunkt von mindestens 1773 Kelvin haben und die bei Dauertemperaturen von über 1073 Kelvin industriell einsetzbar sind.

Als Materialien für die Grundschicht haben sich insbesondere die folgenden Materialien als geeignet erwiesen, wobei bei den Legierungen die Bestandteile in absteigenden Mengen aufgeführt sind:
Metalle:
   - Rhenium
   - Molybdän
   - Zirkon
   - Titan
   - Chrom
   - Niob
   - Tantal
   - Hafnium
   - Vanadium
   - Platin
   - Rhodium
   - Iridium
Legierungen:
   - Blei-Zinn-Titan-Antimon
   - Chrom-Phosphor-Silizium-Eisen-Kohlenstoff-Rest: Nickel
   - Chrom-Silizium-Kohlenstoff-Rest: Nickel
   - Kupfer-Chrom
   - Kupfer-Gold-Nickel
   - Kupfer-Niob
   - Kupfer-Palladium
   - Kupfer-Silizium-Titan
   - Kupfer-Titan
   - Kupfer-Zink-Mangan-Titan-Nickel-Zinn-Aluminium
   - Kupfer-Zink-Titan-Antimon-Silizium
   - Kupfer-Zink-Titan-Zinn-Silizium
   - Kupfer-Zinn-Titan
   - Nickel-Chrom
   - Nickel-Molybdän-Gold
   - Nickel-Silizium-Bor
   - Nickel-Titan
   - Palladium-Nickel-Chrom
   - Phosphor-Kohlenstoff-Rest: Nickel
   - Silber-Kupfer-Palladium
   - Silber-Kupfer-Palladium-Lötlegierung
   - Silber-Kupfer-Titan
   - Legierungen mit überwiegendem Anteil an Titan, Zirkon, Chrom, Niob, Tantal, Hafnium, Vanadium, Platin, Rhodium oder Iridium
Übrige:
   - Aktive Metalle in einer duktilen Matrix, insbesondere Titan in Silber, Kupfer, Gold und/oder Nickel.

Als Material für die Deckschicht kann beispielsweise reines Wolfram, eine Wolframlegierung oder einer Wolframverbindung eingesetzt werden. Nebst Wolfram kommen zudem weitere hochschmelzende Metalle, -Schmelzpunkt vorzugsweise >2000 Kelvin-, wie beispielsweise Tantal, Niobium, Zirkonium oder Hafnium in Frage, wobei die Metalle natürlich auch hier wiederum in Form von Legierungen oder Verbindungen vorkommen können und wobei auch diese Aufzählung keinesfalls abschliessenden Charakter aufweisen soll.

Die Zusammensetzung des Pulvers beim Übergang von der Grund- zur Deckschicht kann sowohl fliessend erfolgen, indem die dem Plasmaspritzgerät pro Zeiteinheit zugeführte Menge an P1 kontinuierlich reduziert und gleichzeitig die Menge an Pulver P2 kontinuierlich erhöht wird. Ebenso kann natürlich ein diskontinuierlicher Übergang erfolgen, indem die Zufuhr von Pulver P1 gestoppt und danach die Beschichtung mit Pulver P2 fortgeführt wird. Insbesondere bei letzterem Verfahren kann es vorteilhaft sein, den Tank 1 nach dem Auftragen der Grundschicht mit einem anderen Gas zu fluten und/oder den Druck im Tank 1 zwischen dem Auftragen der Grund- und der Deckschicht zu variieren.

Schliesslich wird das fertig beschichtete Bauteil in der inerten Atmosphäre unter kontrollierten Bedingungen gekühlt.

Durch die Beeinflussung von Spritzparametern wie Wahl des Plasmagases, Gasmenge, Lichtbogenstrom, Spritzabstand, Druck und Substrattemperatur im Tank sowie auch durch die Menge der pro Zeiteinheit zugeführten Pulvermenge sowie deren Korngrösse kann die Beschaffenheit der aufgetragenen Schicht variiert werden. Das Abstimmen dieser Parameter ist insofern wichtig, da durch sie, unter anderem, der optimale Aufschmelzgrad der Beschichtungspartikel, beim Auftreffen auf der Substratoberfläche, erreicht werden kann.

Versuche haben gezeigt, dass die besten Beschichtungsresultate erzielt werden, wenn die Geschwindigkeit der im Plasmastrahl 7 mitgeführten Beschichtungspartikel grösser als 100 m/s gewählt wird, wobei die derzeitige Obergrenze bei ca. 500 m/s liegt.

Um die Haftung der Deck- auf der Grundschicht zu verbessern bzw. um die Schichtstruktur den Anforderungen entsprechend zu variieren, kann das Substrat 12 nach dem Auftragen der Grundschicht zusätzlich mit einer Zwischenschicht versehen werden. Eine solche Zwischenschicht kann sowohl Bestandteile der Grund- und/oder der Deckschicht aufweisen, wie auch aus anderen Materialien bestehen.

Für bestimmte Einsatzzwecke kann es zudem durchaus genügen, das Substrat nur mit einer Grundschicht zu versehen und gänzlich auf eine Deckschicht zu verzichten.

Versuche haben gezeigt, dass ein Erwärmen des Substrats 12 vor dem Auftragen der Grundschicht nebst dem weitgehenden Beseitigen von mechanischen Spannungen den weiteren Vorteil mit sich bringt, dass ein Eindringen von Rheniumpartikeln in das Kohlenstoff-Gitter des Substrats begünstigt wird, was sich in einer erhöhten Haftung der Grundschicht auf dem Substrat 12 niederschlägt.

Natürlich dringt das beim Auftragen schmelzflüssige Material der Grundschicht auch in die offenen Poren des kohlenstoffhaltigen Substrats ein, wodurch bereits eine gute Grundhaftung der Grundschicht auf dem Substrat erreicht wird.

Der im Tank 1 vorherrschende Druck kann an die Anforderungen angepasst werden. Im Normalfall dürfte zum Beschichten ein Druck zwischen 1 mbar und ca. 4 bar gewählt werden. Je nach Anwendungs- und Anforderungszweck ist es zudem durchaus denkbar, den Tank 1 beim Auftragen der Zwischen- und/oder Deckschicht mit einem Reaktivgas anstelle eines Inertgases zu füllen.

Wird das Substrat 12 vorgewärmt und die Deckschicht unmittelbar nach der Grundschicht aufgetragen, hat dies den Vorteil, dass keine nennenswerten thermomechanische Spannungen sowohl zwischen den Schichten selber wie auch zwischen Substrat und Grundschicht auftreten, da die Grundschicht zusammen mit dem Substrat noch nicht abgekühlt ist wenn die Deckschicht aufgetragen wird. Dies kann insbesondere dann sinnvoll sein, wenn der beschichtete Körper im Einsatz sehr hohen Temperaturen ausgesetzt ist. Als Beispiel hierfür seien Graphitziegel für die Kernfusion oder Anoden für Röntgenröhren erwähnt, welche vorwiegend aus einem Graphitsubstrat oder einem Substrat aus Kohlenstoff-Fasern-Verbundwerkstoffen bestehen und mit einer Wolfram-Deckschicht als Hochtemperatur-Schutzschicht bei der Kernfusion bzw. zur Emission von Röntgenstrahlen in Röntgenröhren versehen sind. Die Oberflächen solcher Graphitziegel oder Anoden können im Betrieb extrem hohen Temperaturen ausgesetzt sein.

Nochfolgend sollen einige bevorzugte, nicht einschränkende Schichtkombinationen aufgezeigt werden, welche mit dem erfindungsgemässen Verfahren auf Kohlenstoffsubstrate bzw. nichtmetallische, kohlenstoffhaltige Substrate aufgebracht werden können. Die nachfolgenden Darstellungen sind lediglich als Prinzipskizzen zu verstehen, welche einen Querschnitt durch das Substrat zusammen mit den aufgetragenen Schichten in einem stark vergrösserten Massstab wiedergeben.

Fig. 2 zeigt ein Substrat A, auf das eine Grundschicht aus Rhenium B und danach eine Deckschicht aus Wolfram C aufgetragen wurde.

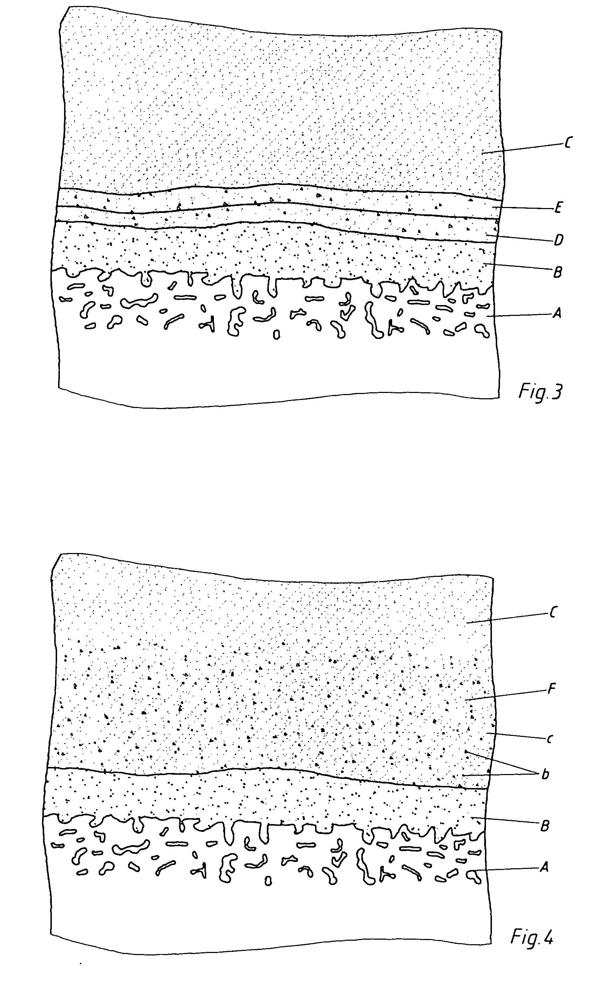

Durch Variation der Substrattemperatur und/oder des Plasmastrahls bzw. der darin erhitzen Beschichtungspartikel können chemische Bindungen zwischen den chemischen Elementen des kohlenstoffhaltigen Substrats, dem Rhenium und dem hochschmelzenden Metall der Deckschicht erzeugt werden. Solche chemischen Bindungen sind beispielsweise in der Fig. 3 -Zwischenschichten D, E- angedeutet.

Durch ändern der Betriebsparameter des Plasmaspritzgeräts kann zudem eine bestimmte Struktur -kristallin- zwischen der Rhenium-Grundschicht B und der aus hochschmelzendem Metall bestehenden Deckschicht C bewirkt werden, wodurch sich beispielsweise die thermomechanischen Eigenschaften des beschichteten Endproduktes optimieren lassen.

Im weiteren weist sowohl das Substrat wie auch jede einzelne Schicht eine kontrollierte Porosität bzw. Mikroporosität auf, welche Porosität den Anforderungen entsprechend in einem gewissen Rahmen variiert werden kann.

Mit dem erfindungsgemässen Verfahren können Grundschichten mit einer Dicke von 1 *µ*m bis über 1 mm und Deckschichten mit einer Dicke von 20 µm bis über 10 mm aufgetragen werden.

Fig. 3 zeigt ein Substrat A, auf das eine Grundschicht B aus Rhenium aufgetragen wurde. Die aus Wolfram bestehende Deckschicht ist wiederum mit C bezeichnet. Zwischen der Grundschicht B und der Deckschicht C sind Zwischenschichten D, E eingezeichnet, welche durch ein chemische Reaktion zwischen dem Substrat A, der Grundschicht B und der Deckschicht C entstanden sind und sich aus deren Bestandteilen zusammensetzen.

Fig. 4 zeigt wiederum ein Substrat A, auf das eine Grundschicht B aus Rhenium und eine Deckschicht aus Wolfram C aufgetragen wurde. Zwischen der Grundschicht B und der Deckschicht C wurde eine Zwischenschicht F aufgetragen, welche sich aus einer Mischung aus Rhenium- und Wolfram- Teilchen b bzw. c zusammensetzt.

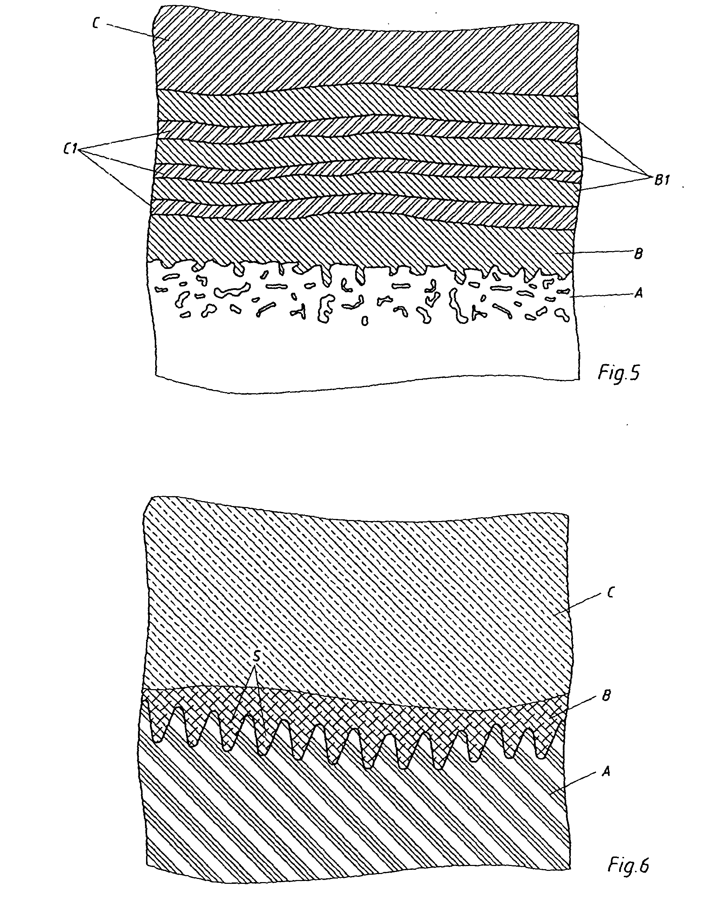

In der Fig. 5 ist schliesslich ein Substrat A eingezeichnet, auf das wechselweise mehrere Schichten aus Rhenium B1 sowie Wolfram C1 aufgetragen wurden. Die Grundschicht besteht jedoch auch hier wiederum aus Rhenium B, währenddem die Deckschicht aus Wolfram C besteht. Die Dicke jeder einzelnen Schicht kann den Anforderungen entsprechend variiert werden. Die Zusammensetzung der Schichten B1 und C1 kann durch eine chemische Reaktion zwischen den Schichten variieren und Elemente sowohl der einen wie auch der anderen Schicht aufweisen.

Schliesslich ist in der Fig. 6 ein Substrat A dargestellt, dessen Oberfläche strukturiert ist. Die eingezeichnete Struktur S kann beispielsweise mechanisch, chemisch oder mittels Laser erfolgen. Der Sinn einer derartigen bzw. einer Strukturierung generell liegt darin, dass die Oberfläche des Substrats vergrössert werden kann, wodurch der Ausdehungskoeffizient zwischen Substrat und Grundschicht angepasst wird und die Haftung und die Eigenspannungen der Grundschicht weiter optimiert werden. Das Aufbringen der Grundschicht B durch Plasmaspritzen hat in diesem Zusammenhang den Vorteil, dass durch die hohe Partikelgeschwindigkeit die Vertiefungen in der Substratoberfläche vollständig von dem in schmelzflüssigem Zustand aufgetragenen Material der Grundschicht ausgefüllt werden können. Nach der Grundschicht kann die Deckschicht C aufgetragen werden.

Zusammenfassend kann festgehalten werden, dass mit dem vorgängig umschriebenen Verfahren, Kohlenstoffsubstrate bzw. nichtmetallische, kohlenstoffhaltige Substrate schnell, umweltfreundlich und preisgünstig beschichtet werden können. Zudem kann die jeweilige Schichtdicke in einem sehr grossen Bereich variiert werden. Ein weiterer Vorteil besteht darin, dass mit dem erfindungsgemässen Verfahren auch sehr grosse Substrate beschichtet werden können. Zudem haften die aufgetragenen Schichten sehr zuverlässig sowohl untereinander wie auch am Substrat selber.

## Patentansprüche

1. Verfahren zum Beschichten eines Kohlenstoffsubstrats oder eines nichtmetallischen, kohlenstoffhaltigen Substrats mit mindestens zwei Schichten, gekennzeichnet durch die Kombination der folgenden Verfahrensschritte:
- das Substrat wird an der Oberfläche auf eine Temperatur zwischen 500°C und 2500°C erhitzt;
- es wird eine zumindest teilweise aus Rhenium, Molybdän, Zirkon, Titan, Chrom, Niob, Tantal, Hafnium, Vanadium, Platin, Rhodium oder Iridium bestehende erste Schicht durch Plasmaspritzen in einer inerten Atmosphäre auf das Substrat aufgetragen;
- nach der ersten Schicht wird zumindest eine Deckschicht aufgetragen, wobei ein kontinuierlicher Übergang zwischen dem Auftragen der ersten und der Deckschicht gewählt wird, indem die dem Plasmastrahl pro Zeiteinheit zugeführte Materialmenge der ersten Schicht kontinuierlich reduziert wird, währenddem gleichzeitig diejenige der Deckschicht kontinuierlich erhöht wird.

2. Verfahren nach Anspruch 1, dadurch gekennzeichnet, dass das Substrat mittels des Plasmaspritzgerätes erhitzt wird.

3. Verfahren nach Anspruch 1 oder 2, dadurch gekennzeichnet, dass die Oberfläche des Substrats vor dem Aufbringen der ersten Schicht mechanisch, chemisch oder mittels Laser strukturiert wird.

4. Verfahren nach einem der vorhergehenden Ansprüche, dadurch gekennzeichnet, dass nach der ersten Schicht die Deckschicht mittels Plasmaspritzen aufgetragen wird.

5. Verfahren nach Anspruch 4, dadurch gekennzeichnet, dass für die Deckschicht zumindest teilweise ein hochschmelzendes Metall verwendet wird.

6. Verfahren nach Anspruch 4 oder 5, dadurch gekennzeichnet, dass die Deckschicht in einer gegenüber der Umgebungsluft abgeschlossenen Atmosphäre aufgetragen wird.

7. Verfahren nach Anspruch 6, dadurch gekennzeichnet, dass die abgeschlossene Atmosphäre vorwiegend durch ein inertes Gas gebildet wird.

8. Verfahren nach einem der vorhergehenden Ansprüche, dadurch gekennzeichnet, dass für die erste Schicht und/oder die Deckschicht ein zumindest teilweise aus einem feuerfesten Metall oder einer feuerfesten Metalllegierung bestehendes Material gewählt wird.

9. Verfahren nach einem der vorhergehenden Ansprüche, dadurch gekennzeichnet, dass die Geschwindigkeit der im Plasmastrahl bewegten Beschichtungspartikel beim Auftragen der ersten Schicht grösser als 100 m/s gewählt wird.

10. Verfahren nach einem der vorhergehenden Ansprüche, dadurch gekennzeichnet, dass die erste Schicht und die Deckschicht in einer abgeschlossene Atmosphäre aufgetragen werden, wobei der vorherrschende Druck auf einem Wert zwischen 1 mbar und 4 bar gehalten wird.

11. Verfahren nach einem der vorhergehenden Ansprüche, dadurch gekennzeichnet, dass eine erste Schicht mit einer Dicke zwischen 1µm und 1mm aufgetragen wird.

12. Verfahren nach einem der vorhergehenden Ansprüche, dadurch gekennzeichnet, dass eine weitere Schicht mit einer Dicke zwischen 20µm und 10 mm aufgetragen wird.

13. Verfahren nach einem der vorhergehenden Ansprüche, dadurch gekennzeichnet, dass die Deckschicht mindestens teilweise aus Wolfram, einer Wolframlegierung oder einer Wolframverbindung besteht.

14. Verfahren nach einem der vorhergehenden Ansprüche, dadurch gekennzeichnet, dass die Deckschicht mindestens teilweise aus Rhenium, Tantal, Niobium, Zirkonium oder Hafnium besteht.

15. Verfahren nach einem der vorhergehenden Ansprüche, dadurch gekennzeichnet, dass die erste Schicht und die Deckschicht nacheinander mit derselben Plasmaspritzvorrichtung aufgetragen werden.

16. Verfahren nach Anspruch 15, dadurch gekennzeichnet, dass sowohl beim Auftragen der ersten Schicht wie auch der Deckschicht eine vorwiegend durch ein inertes Gas gebildete abgeschlossene Atmosphäre aufrechterhalten wird.

17. Verfahren nach einem der vorhergehenden Ansprüche, dadurch gekennzeichnet, dass das die inerte Atmosphäre bildende Gas beim Auftragen der ersten Schicht unterschiedlich zu demjenigen beim Auftragen der Deckschicht ist.

18. Verfahren nach einem der vorhergehenden Ansprüche, dadurch gekennzeichnet, dass als Material für die erste Schicht Rhenium, Molybdän und/oder Zirkon eingesetzt wird.

19. Verfahren nach einem der Ansprüche 1 bis 17, dadurch gekennzeichnet, dass als Material für die erste Schicht eines der folgenden Materialien verwendet wird:
Metalle:
Rhenium, Molybdän, Zirkon, Titan, Chrom, Niob, Tantal, Hafnium, Vanadium, Platin, Rhodium, Iridium
Legierungen:
- Blei-Zinn-Titan-Antimon;
- Chrom-Phosphor-Silizium-Eisen-Kohlenstoff-Rest: Nickel;
- Chrom-Silizium-Kohlenstoff-Rest: Nickel;
- Kupfer-Chrom:
- Kupfer-Gold-Nickel;
- Kupfer-Niob;
- Kupfer-Paladium;
- Kupfer-Silizium-Titan;
- Kupfer-Titan;
- Kupfer-Zink-Mangan-Titan-Nickel-Zinn-Aluminium;
- Kupfer-Zink-Titan-Antimon-Silizium;
- Kupfer-Zink-Titan-Zinn-Silizium;
- Kupfer-Zinn-Titan;
- Nickel-Chrom
- Nickel-Molybdän-Gold;
- Nickel-Silizium-Bor;
- Nickel-Titan;
- Palladium-Nickel-Chrom;
- Phosphor-Kohlenstoff-Rest: Nickel;
- Silber-Kupfer-Palladium;
- Silber-Kupfer-Palladium-Lötlegierung;
- Silber-Kupfer-Titan; oder
- Legierungen mit überwiegendem Anteil an Titan, Zirkon, Chrom, Nickel, Niob, Tantal, Hafnium, Vanadium, Platin oder Rhodium.

20. Verfahren nach einem der Ansprüche 1 bis 19, dadurch gekennzeichnet, dass als Material für die erste Schicht aktive Metalle in einer duktilen Matrix, insbesondere Titan in Silber, Kupfer, Gold und/oder Nickel, eingesetzt werden.

21. Verfahren nach einem der vorhergehenden Ansprüche, dadurch gekennzeichnet, dass ein mehrheitlich aus Kohlenstoff-Fasern-Verbundwerkstoffen bestehendes Substrat verwendet wird.

22. Verfahren nach einem der Ansprüche 1 bis 20, dadurch gekennzeichnet, dass ein mehrheitlich aus Graphit bestehendes Substrat verwendet wird.

23. Kohlenstoffsubstrat oder nichtmetallisches, kohlenstoffhaltiges Substrat, welches nach einem der Ansprüche 1 bis 22 mit mindestens einer ersten Schicht und einer Deckschicht versehen ist, wobei die beiden Schichten kontinuierlich ineinander übergehen.

24. Kohlenstoffsubstrat oder nichtmetallisches, kohlenstoffhaltiges Substrat nach Anspruch 23, dadurch gekennzeichnet, dass die Deckschicht aus Wolfram, einer Wolframlegierung oder einer Wolframverbindung besteht.

25. Kohlenstoffsubstrat oder nichtmetallisches, kohlenstoffhaltiges Substrat nach Anspruch 24, dadurch gekennzeichnet, dass dieses mit einer Zwischenschicht mit Anteilen der ersten Schicht sowie einer Deckschicht aus Wolfram oder einer Wolframlegierung oder einer Wolframverbindung versehen ist.

26. Kohlenstoffsubstrat oder nichtmetallisches, kohlenstoffhaltiges Substrat nach Anspruch 25, dadurch gekennzeichnet, dass dieses zusätzlich mit einer zumindest teilweise aus Tantal, Niobium, Zirkonium oder Hafnium bestehenden Deckschicht versehen ist.

## Claims

1. A process for coating a carbon substrate, or a non-metallic substrate containing carbon, with at least two coatings, characterised by the combination of the following steps:
- the substrate is heated on the surface to a temperature between 500 and 2500°C;
- a first coat consisting at least partly of rhenium, molybdenum, zirconium, titanium, chromium, niobium, tantalum, hafnium, vanadium, platinum, rhodium or iridium is applied to the substrate by plasma spraying in an inert atmosphere.
- after the first layer, at least one top coating is applied, continuous transition between the application of the first and the top coating being preferred by continuously reducing the volume of material fed to the plasma jet per time unit for the first layer while that for the top coating is continuously increased at the same time.

2. A process according to Claim 1, characterised by the fact that the substrate is heated by means of the plasma spraying unit.

3. A process according to Claim 1 or 2, characterised by the fact that the surface of the substrate is structured mechanically, chemically or by means of a laser before the first layer is applied.

4. A process according to one of the preceding Claims, characterised by the fact that the top coating is applied by plasma spraying after the first coat.

5. A process according to Claim 4, characterised by the fact that at least partly a high-melting metal is used for the top coating.

6. A process according to Claim 4 or 5, characterised by the fact that the top coating is applied in an atmosphere enclosed against the ambient air.

7. A process according to Claim 6, characterised by the fact that the enclosed atmosphere is formed predominantly by an inert gas.

8. A process according to one of the preceding Claims, characterised by the fact that a material consisting at least partly of a refractory-grade metal or a refractory-grade metal alloy is preferred for the first layer and/or the top coating.

9. A process according to one of the preceding Claims, characterised by the fact that the preferred rate at which the coating particles move in the plasma jet when applying the first coating is more than 100 m/sec.

10. A process according to one of the preceding Claims, characterised by the fact that the first coating and the top coating are applied in an enclosed atmosphere, the pressure present being kept at between 1 mbar and 4 bars.

11. A process according to one of the preceding Claims, characterised by the fact that a first coating applied is between 1 µm and 1 mm thick.

12. A process according to one of the preceding Claims, characterised by the fact that a further coating applied is between 20 µm and 10 mm thick.

13. A process according to one of the preceding Claims, characterised by the fact that the top coating consists at least partly of tungsten, a tungsten alloy or a tungsten compound.

14. A process according to one of the preceding Claims, characterised by the fact that the top coating consists at least partly of rhenium, tantalum, niobium, zirconium or hafnium.

15. A process according to one of the preceding Claims, characterised by the fact that the first coating and the top coating are applied successively by means of the same plasma spraying device.

16. A process according to Claim 15, characterised by the fact that an enclosed atmosphere predominantly formed by an inert gas is maintained during the application of the first coating as well as the top coating.

17. A process according to one of the preceding Claims, characterised by the fact that the gas forming the inert atmosphere during the application of the first coating is different from that during the application of the top coating.

18. A process according to one of the preceding Claims, characterised by the fact that rhenium, molybdenum and/or zirconium is used as the material for the first coating.

19. A process according to one of the Claims 1 to 17, characterised by the fact that one of the following materials is used as the material for the first coating:
Metals:
Rhenium, molybdenum, zirconium, titanium, chromium, niobium, tantalum, hafnium, vanadium, platinum, rhodium, iridium
Alloys:
- lead/tin/titanium/antimony;
- chromium/phosphorus/silicon/iron/carbon/remainder: nickel;
- chromium/silicon/carbon/remainder: nickel;
- copper/chromium;
- copper/gold/nickel;
- copper/niobium;
- copper/palladium;
- copper/silicon/titanium;
- copper/titanium;
- copper/zinc/manganese/titanium/nickel/tin/aluminium;
- copper/zinc/titanium/antimony/silicon;
- copper/zinc/titanium/tin/silicon;
- copper/tin/titanium;
- nickel/chromium;
- nickel/molybdenum/gold;
- nickel/silicon/boron;
- nickel/titanium;
- palladium/nickel/chromium;
- phosphorus/carbon/remainder: nickel;
- silver/copper/palladium;
- silver/copper/palladium/solder alloy;
- silver/copper/titanium; or
- alloys mainly consisting of titanium, zirconium, chromium, nickel, niobium, tantalum, hafnium, vanadium, platinum or rhodium.

20. A process according to one of the Claims 1 to 19, characterised by the fact that active metals in a ductile matrix, particularly titanium in silver, copper, gold and/or nickel are used as the material for the first coating.

21. A process according to one of the preceding Claims, characterised by the fact that a substrate consisting mostly of carbon fibre compounds is used.

22. A process according to Claims 1 to 20, characterised by the fact that a substrate consisting of graphite is mostly used.

23. A carbon substrate or non-metallic substrate containing carbon provided with at least a first coating and a top coating according to one of the Claims 1 to 22, the two coatings merging into one another at a continuous rate.

24. A carbon substrate or a non-metallic substrate containing carbon according to Claim 23, characterised by the fact that the top coating consists of tungsten, a tungsten alloy or a tungsten compound.

25. A carbon substrate or a non-metallic substrate containing carbon according to Claim 24, characterised by the fact that it is provided with an intermediate layer containing portions of the first coating and a top coating of tungsten or a tungsten alloy or a tungsten compound.

26. A carbon substrate or a non-metallic substrate containing carbon as in Claim 25, characterised by the fact that it is also provided with a top coating consisting at least in part of tantalum, niobium, zirconium or hafnium.

## Revendications

1. Procédé permettant de revêtir d'au moins deux couches un substrat en carbone ou substrat non métallique contenant du carbone, caractérisé par la combinaison des opérations suivantes de procédé :
- on chauffe le substrat, à l'endroit de sa surface, a une température comprise entre 500 °C et 2500 °C ;
- on dépose sur le substrat, par pulvérisation au plasma et dans une atmosphère inerte, une première couche constituée au moins en partie de rhénium, molybdène, zirconium, titane, chrome, niobium, tantale, hafnium, vanadium, platine, rhodium ou iridium ;
- après la première couche, on dépose au moins une couche de couverture, une transition continue entre le dépôt de la première couche et celui de la couche de couverture étant choisie, en diminuant d'une manière continue la quantité de matière de la première couche envoyée au jet de plasma par unité de temps, tandis qu'en même temps, on augmente d'une manière continue celle de la couche de couverture.

2. Procédé suivant la revendication 1, caractérisé en ce qu'on chauffe le substrat au moyen de l'appareil de pulvérisation au plasma.

3. Procédé suivant la revendication 1 ou 2, caractérisé en ce qu'avant l'application de la première couche, on réalise une structuration de la surface du substrat mécaniquement, chimiquement ou au moyen d'un laser.

4. Procédé suivant l'une des revendications précédentes, caractérisé en ce qu'après la première couche, on dépose la couche de couverture par pulvérisation au plasma.

5. Procédé suivant la revendication 4, caractérisé en ce que, pour la couche de couverture, on utilise au moins en partie le métal à point de fusion élevé.

6. Procédé suivant la revendication 4 ou 5, caractérisé en ce qu'on dépose la couche de couverture dans une atmosphère isolée vis-à-vis de l'air environnant.

7. Procédé suivant la revendication 6, caractérisé en ce que l'atmosphère isolée est constituée d'une manière prépondérante d'un gaz inerte.

8. Procédé suivant l'une des revendications précédentes, caractérisé en ce que, pour la première couche et/ou la couche de couverture, on choisit une matière constituée au moins en partie d'un métal réfractaire ou d'un alliage métallique réfractaire.

9. Procédé suivant l'une des revendications précédentes, caractérisé en ce que la vitesse des particules de revêtement déplacées dans le jet de plasma lors du dépôt de la première couche est choisie supérieure à 100 m/s.

10. Procédé suivant l'une des revendications précédentes, caractérisé en ce qu'on dépose la première couche et la couche de couverture dans une atmosphère isolée, la pression qui règne étant maintenue à une valeur comprise entre 1 mbar et 4 bars.

11. Procédé suivant l'une des revendications précédentes, caractérisé en ce qu'on dépose une première couche sous une épaisseur comprise entre 1 *µ*m et 1 mm.

12. Procédé suivant l'une des revendications précédentes, caractérisé en ce qu'on dépose une autre couche sous une épaisseur comprise entre 20 *µ*m et 10 mm.

13. Procédé suivant l'une des revendications précédentes, caractérisé en ce que la couche de couverture est constituée au moins en partie de tungstène, d'un alliage de tungstène ou d'un composé de tungstène.

14. Procédé suivant l'une des revendications précédentes, caractérisé en ce que la couche de couverture est constituée au moins en partie de rhénium, tantale, niobium, zirconium ou hafnium.

15. Procédé suivant l'uns des revendications précédentes, caractérisé en ce qu'on dépose la première couche et la couche de couverture l'une après l'autre au moyen du même appareil de pulvérisation au plasma.

16. Procédé suivant la revendication 15, caractérisé en ce qu'aussi bien lors du dépôt de la première couche que lors de celui de la couche de couverture, on maintient une atmosphère isolée constituée d'une manière prépondérante d'un gaz inerte.

17. Procédé suivant l'une des revendications précédentes, caractérisé en ce que le gaz constituant l'atmosphère inerte lors du dépôt de la première couche est différent de celui utilisé lors du dépôt de la couche de couverture.

18. Procédé suivant l'une des revendications précédentes, caractérisé en ce que, comme matière pour la première couche, on utilise du rhénium, du molybdène et/ou du zirconium.

19. Procédé suivant l'une des revendications 1 à 17, caractérisé en ce que, comme matière pour la première couche, on utilise l'une des matières qui suivent :
Métaux :
rhénium, molybdène, zirconium, titane, chrome, niobium, tantale, hafnium, vanadium, platine, rhodium, iridium ;
Alliages ;
- plomb - étain - titane - antimoine ;
- chrome - phosphore - silicium - fer - carbone - complément : nickel ;
- chrome - silicium - carbone - complément : nickel ;
- cuivre - chrome ;
- cuivre - or - nickel ;
- cuivre - niobium ;
- cuivre - palladium ;
- cuivre - silicium - titane ;
- cuivre - titane ;
- cuivre - zinc - manganèse - titane - nickel - zinc - aluminium ;
- cuivre - zinc - titane - antimoine - silicium ;
- cuivre - zinc - titane - zinc - silicium ;
- cuivre - zinc - titane ;
- nickel - chrome ;
- nickel - molybdène - or ;
- nickel - silicium - bore ;
- nickel - titane ;
- palladium - nickel - chrome ;
- phosphore - carbone - complément : nickel ;
- argent - cuivre - palladium ;
- argent - cuivre - palladium - alliage de brasage ;
- argent- cuivre- titane ; ou
- alliages comportant une proportion prépondérante de titane, zirconium, chrome, niobium, tantale, hafnium, vanadium, platine ou rhodium.

20. Procédé suivant l'une des revendications 1 à 19, caractérisé en ce que, comme matière pour la première couche, on utilise des métaux actifs situés dans une matrice ductile, notamment du titane dans de l'argent, du cuivre, de l'or et/ou du nickel.

21. Procédé suivant l'une des revendications précédentes, caractérisé en ce qu'on utilise un substrat constitué d'une manière prépondérante de substances composites carbone-fibres.

22. Procédé suivant l'une des revendications 1 à 20, caractérisé en ce qu'on utilise un substrat constitué d'une manière prépondérante de graphite.

23. Substrat en carbone ou substrat non métallique contenant du carbone qui est pourvu d'au moins une première couche et une couche de couverture conformément à l'une des revendications 1 à 22, les deux couches variant avec une transition continue de l'une dans l'autre.

24. Substrat en carbone ou substrat non métallique contenant du carbone suivant la revendication 23, caractérisé en ce que la couche de couverture est en tungstène, en un alliage de tungstène ou en un composé de tungstène.

25. Substrat en carbone ou substrat non métallique contenant du carbone suivant la revendication 24, caractérisé en ce que celui-ci est pourvu d'une couche intermédiaire comportant une participation de la première couche et une couche de couverture en tungstène, en un alliage de tungstène ou en un composé de tungstène.

26. Substrat en carbone ou substrat non métallique contenant du carbone suivant la revendication 25, caractérisé en ce que celui-ci est pourvu en outre d'une couche de couverture constituée au moins en partie de tantale, niobium, zirconium ou hafnium.
